# EUROPÄISCHE PATENTSCHRIFT

(11) **EP 0 627 735 B1**
(45) Veröffentlichungstag und Bekanntmachung des Hinweises auf die Patenterteilung: **06.10.1999**
(21) Anmeldenummer: 94107976.6
(22) Anmeldetag: 25.05.1994
(51) Int. Cl.: G11B 11/10

(54) **Optisches System zur Wiedergabe und/oder Aufzeichnung von Information**
Optical system for information playback and/or recording
Système optique pour la reproduction et/ou l'enregistrement d'information

(30) Priorität: 03.06.1993 EP 93401429
(43) Veröffentlichungstag der Anmeldung: 07.12.1994
(73) Patentinhaber: THOMSON multimedia, 92648 Boulogne Cédex (FR)
(72) Erfinder: Maurice, François, F-38210 Tullens (FR)
(74) Vertreter: Wördemann, Hermes, Dipl.-Ing.

(56) Entgegenhaltungen:
- EP-A- 0 226 647
- EP-A- 0 294 902
- EP-A- 0 373 700
- EP-A- 0 436 424
- PROCEEDINGS OF MAGNETO-OPTICAL RECORDING INTERNATIONAL SYMPOSIUM '91, Bd.15, Nr.S1, 1991, THE MAGNETICS SOCIETY OF JAPAN Seiten 389 - 394 F. MAURICE 'Towards the multitrack digital video tape recorder'
- IBM TECHNICAL DISCLOSURE BULLETIN, Bd.34, Nr.10A, März 1992, AMONK NY. USA. Seiten 268 - 269 'Integrated head for optical storage'
- JOURNAL OF APPLIED PHYSICS, Bd.73, Nr.10, 15. Mai 1993, PART IIB, NY US, Seiten 6238 - 6240 LETEXIER ET AL 'LONGITUDINAL KERR EFFECT ENHANCEMENT OF A 384 TRACK HEAD FOR HIGH DATA RATE READOUT'

## Beschreibung

Die Erfindung betrifft ein Verfahren und eine Anordnung eines optischen Systems zur Wiedergabe und/oder Aufzeichnung von Informationen durch Relativbewegung zwischen einem Informationsträger und einer Abtast- und/oder Aufzeichnungseinrichtung, vorzugsweise für eine Einrichtung zur Wiedergabe von auf magnetischen Informationsträgern, wie beispielsweise Magnetbänder oder magnetischen Platten, aufgezeichneten Informationen, die auch in mehreren Spuren aufgezeichnete Audio- und/oder Datensignale sein können.

Zur Wiedergabe von in mehreren Spuren auf einem magnetischen Informationsträger gespeicherter Informationen ist eine magneto-optische Abtasteinrichtung bekannt, die aus einem ersten optischen System, einem magneto-optischen Wandler und einem zweiten optischen System besteht, vgl. Fig.5 in EP 04 36 424 A1. Mit dem ersten optischen System, das im wesentlichen aus einer Laserdiode als Quelle kohärenten Lichtes, einer Kollimatorlinse und einer fokussierenden Zylinderlinse besteht, wird ein schmaler Lichtstreifen erzeugt, der auf einer sogenannten Kerr-Schicht des magneto-optischen Wandlers abgebildet wird. Der Lichtstreifen weist eine Breite von wenigen µm sowie eine der Anzahl gleichzeitig abzutastender Spuren oder der Breite eines Magnetbandes entsprechende Länge von einigen mm auf. Im magneto-optischen Wandler wird das Licht an der Kerr-Schicht reflektiert und bei Einwirkung eines Magnetfeldes in seiner Polarisationsrichtung gedreht, wobei sich infolge einer von der Senkrechten abweichenden Bestrahlung der Kerr-Schicht der Lichteintritts- vom Lichtaustrittsort unterscheidet. Mit dem zweiten optischen System, das aus einer Linse, einem Analysator und einem CCD-Sensor besteht, wird dann das vom magneto-optischen Wandler reflektierte Licht zur Wiedergabe der in der oder den magnetischen Spuren des Informationsträgers gespeicherten Informationen detektiert. Die magneto-optische Abtasteinrichtung besteht aus einer Vielzahl von Einzelelementen, die exakt zueinander zu justieren sind und erfordert einen hohen Aufwand. Weiterhin führen die Verwendung einer Kollimator- und einer Zylinderlinse zu nachteiligen Aberrationen und die Abtasteinrichtung ist mit vertretbarem Aufwand nur für kleine Aperturen bzw. im Zusammenhang mit kleinen Lichtstreifen oder einer geringen Abtastbreite anwendbar.
Es ist bereits eine geringeren Justageaufwand und eine geringere Anzahl von Einzelelementen aufweisende Einrichtung zum Lesen bzw. Abtasten länglicher Abschnitte bzw. mehrerer Informationsspuren eines vorbeigeführten Speichermediums bekannt, die aus einer Quelle polarisierten Lichtes zur Fokussierung eines dem abzutastenden Abschnitt entsprechenden Lichtstreifens, einer konzentrischen Doppelspiegelanordnung und einem CCD-Sensor besteht, vgl. MAURICE François: TOWARDS THE MULTITRACK DIGITAL VIDEO TAPE RECORDER, the Magnetics Society of Japan, 1991, Vol-15, Supplement No. 1, S. 389-394.
Diese Einrichtung weist insbesondere durch das Verwenden einer aus einem Konvex- und einem Konkavspiegel bestehenden konzentrischen Doppelspiegelanordnung zum Abbilden eines vom magneto-optischen Wandler detektierten Lichtstreifens auf dem CCD-Sensor eine geringere Aberration und eine hohe Auflösung auf und die Doppelspiegelanordnung ermöglicht einen kompakteren Aufbau der Abtasteinrichtung. Dennoch sind ein erstes optisches System, ein magneto-optischer Wandler und ein zweites optisches System erforderlich, die aus einer Reihe von Einzelelementen bestehen und mit hohem Aufwand zueinander zu justieren sind.

Aus der EP-A-0 294 902 ist ein optisches System zur Informationsträgerabtastung bekannt, bei dem eine mit einem Konkavspiegel und einem Konvexspiegel gebildete konzentrische Doppelspiegelanordnung verwendet wird. Dabei wird die Doppelspiegelanordnung in bidrektionaler Weise sowohl als optisches System bei der Erzeugung eines Abtastlichtfleckes als auch als optisches System bei der Lichtfleckabtastung benutzt.

Es ist Aufgabe der Erfindung ein Verfahren und eine Anordnung für ein optisches System zur Wiedergabe und/oder Aufzeichnung von Informationen im Zusammenhang mit einer Relativbewegung zwischen einem Informationsträger und einer Abtast- und/oder Aufzeichnungseinrichtung, vorzugsweise für eine Einrichtung zur Wiedergabe von auf magnetischen Informationsträgern, wie beispielsweise Magnetbänder oder magnetischen Platten, aufgezeichneten Informationen, die auch in mehreren Spuren aufgezeichnete Audio- und/oder Datensignale sein können, zu schaffen, die trotz vergleichbarer Qualität mit geringem Aufwand realisiert werden können und eine geringere Anzahl von Justiermitteln erfordern.

Diese Aufgabe wird durch die in den Ansprüchen 1 und 6 angegebenen Merkmale gelöst. Vorteilhafte Weiterbildungen sind in den Unteransprüchen angegeben.

Der Erfindung liegt das Prinzip zugrunde, daß sowohl zur Bildung eines Lichtfleckes als auch zum Abtasten eines Reflektionslichtfleckes eine konzentrische Doppelspiegelanordnung, die aus einem Konvexspiegel mit einem ersten Wölbungsradius und einem Konkavspiegel mit einem zweiten Wölbungsradius besteht, bidirektional verwendet wird, wobei der zweite Wölbungsradius vorzugsweise gleich dem Zweifachen des ersten Wölbungsradius ist. Mit der konzentrischen Doppelspiegelanordnung werden mindestens zwei Lichtflecke beliebiger Form in gegensätzlicher Richtung abgebildet. Das bekannte erste optische System zur Lichtfleckbildung und das bekannte zweite optische System zur Lichtfleckabtastung werden mit nur einem optischen System realisiert, das bidirektional verwendet wird. Die sich insbesondere aus der Verwendung einer Kollimatorlinse im Zusammenhang mit einer Zylinderlinse zum Erzeugen eines schmalen Lichtstreifens ergebenden Nachteile treten nicht auf. Ein einen Lichtfleck auf einem magneto-optischen Wandler oder einem Informationsträger bildender Lichtaustrittsbereich ist dabei vorzugsweise außerhalb eines einen Reflektionslichtfleck aufnehmenden Lichteintrittsbereiches vorgesehen.
Neben der bidirektionalen Verwendung der konzentrischen Doppelspiegelanordnung zur Wiedergabe von auf Informationsträgern gespeicherter Informationen kann die konzentrische Doppelspiegelanordnung durch Ergänzung oder auch ausschließlich dazu verwendet werden, um Informationen auf einem Informationsträger zu speichern. Nachfolgend soll jedoch insbesondere auf die Wiedergabe von in mehreren magnetischen Informationsspuren aufgezeichneten Informationen eingegangen werden, die das Prinzip der mehrfachen Verwendung nur eines optischen Systems sowohl zur Bildung eines Lichtfleckes als auch zum Abtasten eines Reflektionslichtfleckes deutlich macht.

Zum Abtasten in mehreren Spuren eines magnetischen Informationsträgers aufgezeichneter Informationen wird ein mit der konzentrischen Doppelspiegelanordnung auf der Kerr-Schicht eines magneto-optischen Wandlers abgebildeter strichförmiger Lichtfleck als virtuelles Bild einer punktförmigen Lichtquelle mit einem Zylinderspiegel und einem dem Konkavspiegel der Doppelspiegelanordnung gegenübergestellten ersten ebenen Spiegel erzeugt. Als punktförmige Lichtquelle wird ein Laser verwendet, dessen Emissionspunkt annähernd im Fokus des Zylinderspiegels positioniert ist, so daß ein virtuelles Bild eines schmalen Lichtstreifens senkrecht zur Ausbreitungsrichtung erzeugt wird. Dieser Lichtstreifen wird dann mit der konzentrischen Doppelspiegelanordnung auf dem Kerr-Kopf bzw. einer Kerr-Schicht eines magneto-optischen Wandlers abgebildet. Insbesondere zum Abtasten in mehreren Spuren aufgezeichneter Informationen wird durch die Verwendung einer Zylinderlinse im Zusammenhang mit der konzentrischen Doppelspiegelanordnung ein schmaler strichförmiger Abtastlichtfleck erzeugt, der das Abtasten mehrerer einzelner Informationsspuren mit einem elektro-optischen Wandler ermöglicht. Dadurch, daß der Lichtstreifen mit einer Zylinderlinse und der konzentrischen Doppelspiegelanordnung auf der Kerr-Schicht abgebildet wird, treten vergleichsweise geringere Aberrationen auf und können größere Aperturen realisiert werden.
Mit der Kerr-Schicht eines magneto-optischen Wandlers wird die Polarisationsrichtung auftreffenden Lichtes bei Einwirkung eines Magnetfeldes gedreht und der magneto-optische Wandler kann in bekannter Weise als Mehrspurlesekopf verwendet werden.
Zum Abtasten bzw. zum Lesen in mehreren Spuren aufgezeichneter Informationen wird ein von der Kerr-Schicht reflektierter strichförmiger Reflektionslichtfleck mit einem zweiten ebenen Spiegel, der dem Konkavspiegel der Doppelspiegelanordnung gegenübergestellt ist, der Doppelspiegelanordnung selbst und einem dritten ebenen Spiegel, der dem Konkavspiegel der Doppelspiegelanordnung gegenübergestellt ist, auf einem photo-elektrischen Wandler abgebildet, der vorzugsweise ein CCD-Sensor ist. Die Doppelspiegelanordnung wird dadurch in vorteilhafter Weise sowohl zur Bildung eines Lichtfleckes als auch zum Abtasten eines Reflektionslichtfleckes bzw. bidirektional verwendet. Der Konkavspiegel und der Konvexspiegel, die eine konzentrische Doppelspiegelanordnung bilden, ein erster, ein zweiter und ein dritter ebener Spiegel sowie ein Zylinderspiegel werden vorzugsweise als reflektierende Oberflächen auf einem einstückigen, optisch durchlässigen Träger hergestellt, der mit dem magneto-optischen Wandler verbunden ist, wodurch eine kompakte und mit geringem Aufwand herstellbare optische Baugruppe entsteht, die den Justageaufwand für das optische System wesentlich verringert.
Zum Herstellen des optisch durchlässigen Trägers wird vorzugsweise ein Material mit hohem Brechungsindex verwendet, wobei als Material beispielsweise Glas oder Kunststoff verwendet werden können und der magneto-optische Wandler wird vorzugsweise mit einem optisch durchlässigen Kleber am Träger befestigt. Vorteilhaft ist, daß eine hohe Genauigkeit der Abbildung erzielt wird, während unkomplizierte Spiegel anstelle von aufwendigeren Linsensystemen eingesetzt werden und dadurch Justageaufwand und die Abmessungen des optischen Systems reduziert werden können.

Die Erfindung wird nachfolgend in einem Ausführungsbeispiel anhand von Zeichnungen näher erläutert.
Es zeigen:
- Figur 1: Prinzipskizze einer Einrichtung zur Wiedergabe von auf magnetischen Informationsträgern in mehreren Spuren aufgezeichneter Informationen,
- Figur 2: Prinzipskizze eines bekannten magneto-optischen Lesesystems,
- Figur 3: Prinzipskizze zur bidirektionalen Verwendung einer konzentrischen Doppelspiegelanordnung.

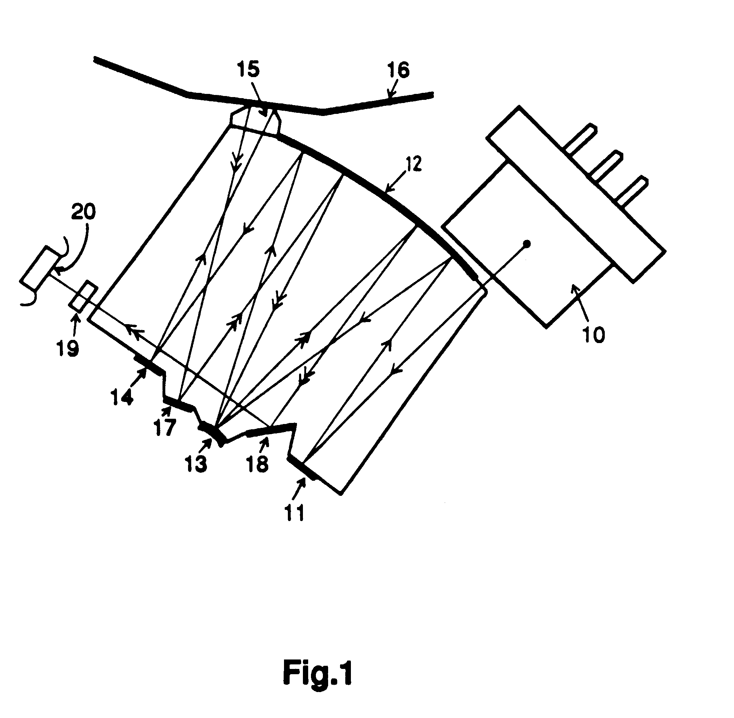

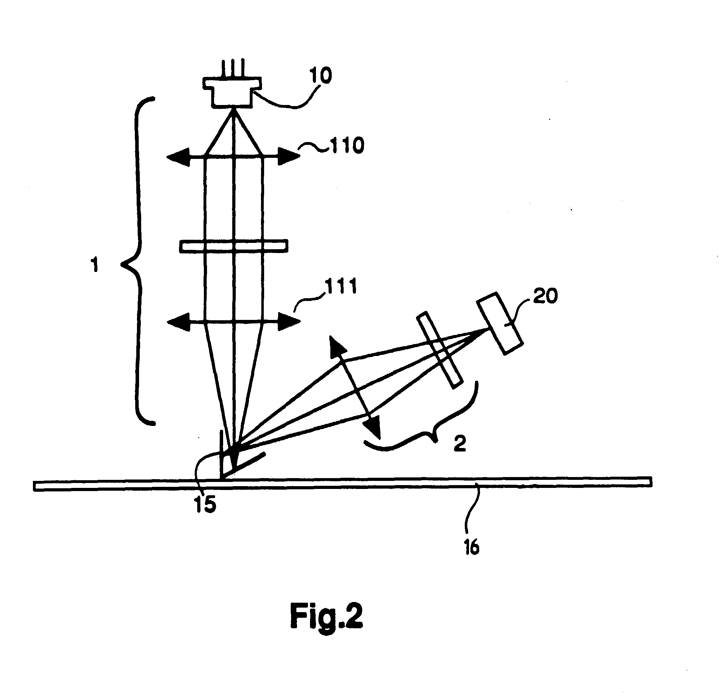

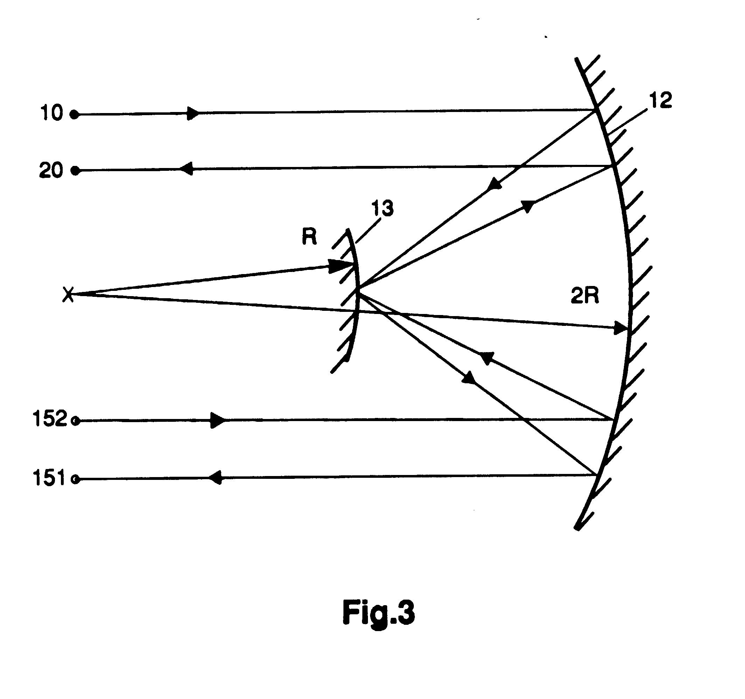

Das Prinzip der bidirektionalen Verwendung einer konzentrischen Doppelspiegelanordnung 12, 13 sowohl zur Bildung eines Lichtfleckes 151 als auch zum Abtasten eines Reflektionslichtfleckes 152 ist in Fig. 3 dargestellt. Die konzentrische Doppelspiegelanordnung 12, 13 , die aus einem Konvexspiegel 13 mit einem ersten Wölbungsradius R und einem Konkavspiegel 12 mit einem zweiten Wölbungsradius 2R besteht, wird bidirektional verwendet , wobei der zweite Wölbungsradius 2R vorzugsweise gleich das Zweifache vom ersten Wölbungsradius R ist. Mit einer konzentrischen Doppelspiegelanordnung 12, 13 können vorteilhaft mindestens zwei Lichtflecke 151, 152 beliebiger Form in gegensätzlicher Richtung abgebildet werden. Fig. 3 entsprechend, die zur Darstellung des Prinzips angegeben ist, wird beispielsweise mit einer punktförmigen Lichtquelle 10 spiegelbildlich zur optischen Achse der Doppelspiegelanordnung 12, 13 ein Lichtfleck 151 abgebildet und andererseits wird ein zweiter neben dem Lichtfleck 151 vorhandener Lichtfleck, der beispielsweise ein Reflektionslichtfleck 151 ist, ebenfalls spiegelbildlich zur optischen Achse der Doppelspiegelanordnung 12, 13 an einem Ort abgebildet, der beispielsweise mit einem photo-elektrischen Wandler 20 besetzt ist und neben der punktförmigen Lichtquelle 10 auftritt. Ein einen Lichtfleck 151 bildender Lichtaustrittsbereich ist dabei vorzugsweise außerhalb eines einen Reflektionslichtfleck 152 aufnehmenden Lichteintrittsbereiches vorgesehen. In einer Ausführung der besonderen Verwendung der Doppelspiegelanordnung 12, 13 wird ein bekanntes magneto-optischen Lesesystems, das in Fig.2 dargestellt ist und aus einem ersten optische System 1 zur Lichtfleckbildung, einem magneto-optischen Wandler 15 und aus einem zweiten optische System 2 zur Lichtfleckabtastung besteht, mit nur einem optischen System, das bidirektional verwendet wird, realisiert, wobei die beim bekannten Lesesystem sich durch Verwendung einer Kollimatorlinse 110 im Zusammenhang mit einer Zylinderlinse 111 zum Erzeugen eines schmalen Lichtstreifens ergebenden Nachteile bei Mehrspureinrichtungen nicht auftreten. Eine Anordnung für ein optisches System zur Wiedergabe und/oder Aufzeichnung von Informationen im Zusammenhang mit einer Relativbewegung zwischen einem Informationsträger und einer Abtast- und/oder Aufzeichnungseinrichtung, beziehungsweise eine Einrichtung zur Wiedergabe von auf magnetischen Informationsträgern, wie beispielsweise Magnetbänder oder magnetischen Platten, aufgezeichneten Informationen, die auch in mehreren Spuren aufgezeichnete Audio- und/oder Datensignale sein können und nur aus einem optischen System in Form einer kompakten Baugruppe besteht, ist in Figur 1 dargestellt.
Zum Abtasten in mehreren Spuren eines magnetischen Informationsträgers aufgezeichneter Informationen wird ein mit der konzentrischen Doppelspiegelanordnung 12, 13 auf der Kerr-Schicht eines magneto-optischen Wandlers 15 abgebildeter strichförmiger Lichtfleck als virtuelles Bild einer punktförmigen Lichtquelle 10 mit einem Zylinderspiegel 11 und einem, dem Konkavspiegel 12 der Doppelspiegelanordnung 12, 13 gegenübergestellten, ersten ebenen Spiegel 14 erzeugt.
In Figur 1 ist der von einer punktförmigen Lichtquelle 10, die ein Laser ist, zu einem magneto-optischen Wandler 15 führende Lichtweg mit einem einfachen Pfeil und der von dem magneto-optischer Wandler 15 zu einem photo-elektrischen Wandler 20, geführte Lichtweg durch einen doppelten Pfeil gekennzeichnet.
Die punktförmige Lichtquelle 10 ist annähernd im Brennpunkt des Zylinderspiegels 11 positioniert und das mit dem Zylinderspiegel 11 erzeugte virtuelle Bild der punktförmigen Lichtquelle 10 ist ein nahezu perfekter Strich bzw. ein strichförmiger Lichtfleck, der senkrecht zur gekennzeichneten Übertragungsrichtung und somit senkrecht auf der Zeichenebene der Fig. 1 steht. Das mit dem Zylinderspiegel 11 erzeugte virtuelle Bild befindet sich in einer Entfernung 2R vom Konkavspiegel 12. Dieser schmale Lichtstreifen wird mit der konzentrischen Doppelspiegelanordnung 12, 13 , welche von dem Konkavspiegel 12 mit dem Radius 2R und dem Konvexspiegel 13 mit dem Radius R gebildet wird, sowie dem ebenen Spiegel 14 auf den magneto-optischen Wandler 15 gelenkt. Der Konvexspiegel 13 mit dem Radius R weist hierzu einen kleineren Öffnungswinkel als der Konkavspiegel 12 auf. Am magneto-optischen Wandler 15 , der eine Kerr-Schicht enthält, liegt ein magnetischer Informationsträger 16 an bzw. wird ein Informationsträger 16 vorbeigeführt, auf dem vorzugsweise in mehreren Spuren Informationen gespeichert sind. Im magneto-optischen Wandler 15 wird der strichförmige Lichtfleck zweimal reflektiert. Dabei handelt es sich um eine Totalreflexion und um eine Reflexion an der Kerr-Schicht, durch welche bei Magnetfeldeinwirkung in bekannter Weise eine Änderung der Polarisationsrichtung des Lichtes erfolgt. Der aus dem magneto-optischen Wandler 15 austretende bzw. reflektierte Lichtfleck bzw. streifenförmige Reflektionslichtfleck wird dann mit einem zweiten ebenen Spiegel 17 wiederum durch die Doppelspiegelanordnung 12, 13 geführt und gelangt mit einem dritten ebenen Spiegel 18 durch einen Analysator 19 hindurch auf einen photo-elektrischen Wandler 20, der vorzugsweise ein CCD-Sensor bzw. Charge Coupled Device ist. Die Doppelspiegelanordnung 12, 13 wird dadurch in vorteilhafter Weise sowohl zur Bildung eines Lichtfleckes 151 als auch zum Abtasten eines Reflektionslichtfleckes 152 bzw. bidirektional verwendet. Es ist gewährleistet, daß die beiden Lichtflecke 151, 152 , welche in unterschiedlicher Richtung durch die Doppelspiegelanordnung 12, 13 gelenkt werden, räumlich getrennt sind, so daß keine Überschneidungen auf dem Konkavspiegel 12 auftreten. In Fig. 1 ist der zum magneto-optischer Wandler 15 geführte Lichtfleck, dessen Übertragungsrichtung durch einen einfachen Pfeil gekennzeichnet ist beim Auftreffen auf den Konkavspiegel 12 weiter von dessen optischer Achse entfernt, als der vom magneto-optischen Wandler 15 reflektierte Lichtfleck, dessen Übertragungsrichtung durch einen doppelten Pfeil in Fig.1 gekennzeichnet ist.
Der Konkavspiegel 12 und der Konvexspiegel 13, welche die konzentrische Doppelspiegelanordnung 12, 13 bilden, der erste, der zweite und der dritte ebene Spiegel 14, 17, 18 sowie der Zylinderspiegel 11 werden Fig. 1 entsprechend als reflektierende Oberflächen auf einem einstückigen, optisch durchlässigen Träger hergestellt, der mit dem magneto-optischen Wandler 15 verbunden ist, wodurch eine kompakte und mit geringem Aufwand herstellbare optische Baugruppe entsteht. Dadurch ist der Justageaufwand für das optische System wesentlich geringer. Zum Herstellen des optisch durchlässigen Trägers wird ein Material mit hohem Brechungsindex verwendet, wobei als Material Glas oder Kunststoff verwendet werden. Der magneto-optische Wandler wird mit einem optisch durchlässigen Kleber am Träger befestigt.
Vorteilhaft ist, daß trotz unkomplizierte Spiegel 11, 12, 13, 14, 17, 18 eine hohe Genauigkeit der Abbildung erzielt wird, und der Justageaufwand sowie die Abmessungen des optischen Systems reduziert werden.
Je größer die numerische Apertur des Systems ist, desto weiter wird der vom Zylinderspiegel 11 reflektierte strichförmige Lichtfleck von der optischen Achse des Konkavspiegels 12 entfernt auf diesen treffen. Aus diesem Grunde ist es vorteilhaft, als Träger ein Medium mit hohem Brechungsindex zu verwenden, um die Entfernung des auftreffenden Lichtflecks zur optischen Achse zu minimieren und Aberrationen zu vermindern. Die aus den Spiegeln 11, 12, 13, 14, 17, 18 bestehend Anordnung, wird aus einem Stück gefertigt, wobei als Material Glas oder Kunststoff verwendet werden. Die Oberflächen des Trägers erhalten eine Formgebung, mit der die unterschiedlichen Spiegel 11, 12, 13, 14, 17, 18 realisiert werden, wobei diese Oberflächenpartien durch Verspiegelung die notwendige Reflexionsfähigkeit erhalten. Auf diese Weise erhält man ein einziges optisches Bauteil, welches mit dem magneto-optischen Wandler 15 verbunden wird. Die Verbindung erfolgt durch Ankleben.

## Patentansprüche

1. Verfahren für ein optisches System zur Wiedergabe und/oder Aufzeichnung von Informationen im Zusammenhang mit einer Relativbewegung zwischen einem Informationsträger und einer Abtast- und/oder Aufzeichnungseinrichtung, vorzugsweise für eine Einrichtung zur Wiedergabe von auf magnetischen Informationsträgern, wie beispielsweise Magnetbändern oder magnetischen Platten, aufgezeichneten Informationen, die auch in mehreren Spuren aufgezeichnete Audio- und/oder Datensignale sein können, mit einem ersten optischen System (1) zum Bilden eines Abtastlichtfleckes und mit einem zweiten optischen System (2) zur Abtastung des Informationsträgers (16) mit einer konzentrischen Doppelspiegelanordnung (12, 13), die einen Konvexspiegel (13) mit einem ersten Wölbungsradius und einen Konkavspiegel (12) mit einem zweiten Wölbungsradius enthält, wobei der zweite Wölbungsradius vorzugsweise gleich dem Zweifachen vom ersten Wölbungsradius ist, wobei eine konzentrische Doppelspiegelanordnung (12, 13) durch eine Integration der Funktionen des bekannten ersten optischen Systems (1) zur Lichtfleckbildung und des zweiten optischen Systems (2) zur Lichtfleckabtastung in nur einem optischen System bidirektional verwendet wird,
und wobei ein mit der Doppelspiegelanordnung (12, 13) auf der Kerr-Schicht eines magneto-optischen Wandlers (15) abgebildeter strich-förmiger Lichtfleck (151) als virtuelles Bild einer punktförmigen Lichtquelle mit einem Zylinderspiegel (11) und einem dem Konkavspiegel (12) der Doppelspiegelanordnung (12, 13) gegenübergestellten ersten ebenen Spiegel (14) erzeugt und ein von der Kerr-Schicht reflektierter strichförmiger Reflektionslichtfleck (152) mit einem zweiten ebenen Spiegel (17), der dem Konkavspiegel (12) der Doppelspiegelanordnung (12, 13) gegenübergestellt ist, der Doppelspiegelanordnung (12, 13) und einem dritten ebenen Spiegel (18), der dem Konkavspiegel (12) der Doppelspiegelanordnung (12, 13) gegenübergestellt ist, auf einem photoelektrischen Wandler (20) abgebildet wird.

2. Verfahren nach Anspruch 1, **dadurch gekennzeichnet**, daß zum Abtasten in mehreren Spuren aufgezeichneter Informationen durch die Verwendung einer Zylinderlinse (11) im Zusammenhang mit der konzentrischen Doppelspiegelanordnung (12, 13) ein schmaler strichförmiger Abtastlichtfleck erzeugt wird, mit dem das Abtasten mehrerer einzelner Informationsspuren mit einem elektro-optischen Wandler (20) durchgeführt wird.

3. Verfahren zum Herstellen einer zur Durchführung des Verfahrens nach einem der Ansprüche 1 bis 2 vorgesehenen Anordnung mit einem Konkavspiegel (12) und einem Konvexspiegel (13), die eine konzentrische Doppelspiegelanordnung (12, 13) bilden, wobei ein erster, ein zweiter und ein dritter ebener Spiegel (14, 17, 18) und ein Zylinderspiegel (11) als reflektierende Oberflächen auf einem einstückigen, optisch durchlässigen Träger hergestellt werden.

4. Verfahren zum Herstellen einer zur Durchführung des Verfahrens nach einem der Ansprüche 1 bis 3 vorgesehenen Anordnung, **dadurch gekennzeichnet**, daß ein Konkavspiegel (12) und ein Konvexspiegel (13), die eine konzentrische Doppelspiegelanordnung (12, 13) bilden, ein erster, ein zweiter und ein dritter ebener Spiegel (14, 17, 18) und ein Zylinderspiegel (11) als reflektierende Oberflächen auf einem einstückigen, optisch durchlässigen Träger hergestellt werden, der einen hohen Brechungsindex aufweist.

5. Verfahren zum Herstellen einer zur Durchführung des Verfahrens nach einem der Ansprüche 1 bis 4 vorgesehenen Anordnung, **dadurch gekennzeichnet**, daß der magneto-optische Wandler (15) mit einem optisch durchlässigen Kleber an einem optisch durchlässigen Träger befestigt als kompakte optische Baugruppe hergestellt wird, wobei vom optischen Träger durch reflektierende Oberflächen ein Konkavspiegel (12) und ein Konvexspiegel (13) als konzentrischer Doppelspiegel (12, 13), ein erster, ein zweiter und ein dritter ebener Spiegel (14, 17, 18) und ein Zylinderspiegel (11) gebildet werden.

6. Anordnung für ein optisches System zur Wiedergabe und/oder Aufzeichnung von Informationen im Zusammenhang mit einer Relativbewegung zwischen einem Informationsträger und einer Abtast- und/oder Aufzeichnungseinrichtung, vorzugsweise für eine Einrichtung zur Wiedergabe von auf magnetischen Informationsträgern, wie beispielsweise Magnetbändern oder magnetischen Platten, aufgezeichneten Informationen, die auch in mehreren Spuren aufgezeichnete Audio- und/oder Datensignale sein können, mit einem ersten optischen System (1) zum Bilden eines Abtastlichtfleckes und mit einem zweiten optischen System (2) zur Abtastung des Informationsträgers (16) mit einer konzentrischen Doppelspiegelanordnung (12, 13), die einen Konvexspiegel (13) mit einem ersten Wölbungsradius sowie einen Konkavspiegel (12) mit einem zweiten Wölbungsradius enthält, der vorzugsweise gleich dem Zweifachen des ersten Wölbungsradius ist, wobei
- zwei sphärische Spiegel, ein Konkavspiegel (12) mit dem Radius 2R und ein Konvexspiegel (13) mit dem Radius R, der einen kleineren Öffnungswinkel als der Konkavspiegel (12) aufweist, als konzentrische Doppelspiegelanordnung (12, 13) vorgesehen sind,
- eine punktförmige Lichtquelle (10) auf einer ersten Seite der Doppelspiegelanordnung (12, 13) annähernd in Höhe des Konkavspiegels (12) vorgesehen ist,
- ein ein strichförmiges, virtuelles Bild der Lichtquelle (10) erzeugender Zylinderspiegel (11) auf der Seite des Konvexspiegels (13) der Doppelspiegelanordnung (12, 13) annähernd in Höhe des Konvexspiegels (13) zum Abbilden des virtuellen Bildes der Lichtquelle (10) durch Reflexion auf dem Konkavspiegel (12), danach auf dem Konvexspiegel (13) und erneut auf dem Konkavspiegel (12) sowie auf
- einem annähernd in Höhe des Konvexspiegels (13) angeordneten ersten ebenen Spiegel (14) vorgesehen ist,
- dem das abgebildete virtuelle Bild reflektierenden ersten ebenen Spiegel (14) annähernd in Höhe des Konvexspiegels (13) eine Kerr-Schicht eines magneto-optischen Wandlers (15) gegenübergestellt ist, auf welche mit dem ersten ebenen Spiegel (14) ein Abtastlichtfleck gelenkt wird,
- ein zweiter ebener, das im magneto-optischen Wandler (15) reflektierte Licht auf den Konkavspiegel (12) reflektierender Spiegel (17) neben dem ersten ebenen Spiegel (14) und dem Konvexspiegel (13) angeordnet ist,
- ein dritter ebener Spiegel (18) neben dem Konvexspiegel (13) und dem Zylinderspiegel (11) vorgesehen ist, der das vom zweiten ebenen Spiegel (17) auf den Konkavspiegel (12), von dort auf den Konvexspiegel (13) und von dort erneut auf den Konkavspiegel (12) reflektierte Licht durch einen Analysator (19) hindurch
- auf einen photo-elektrischen Detektor (20) reflektiert.

7. Anordnung nach Anspruch 6, **dadurch gekennzeichnet**, daß der Konkavspiegel (12), der Konvexspiegel (13), die drei ebenen Spiegel (14, 17, 18) und der Zylinderspiegel (11) reflektierende Oberflächen eines einstückigen, optisch durchlässigen Trägers sind, mit dem ein magneto-optischer Wandler (15) verbunden ist.

8. Anordnung nach Anspruch 7, **dadurch gekennzeichnet**, daß der optisch durchlässige Träger ein durchsichtiges Material mit hohem Brechungsindex ist.

9. Anordnung nach einem der Anspruche 7 oder 8, **dadurch gekennzeichnet**, daß der magneto-optische Wandler (15) und der optisch durchlässige Träger über eine optisch durchlässige Klebeschicht miteinander verbunden sind.

## Claims

1. Process for an optical system for the reproduction and/or recording of information in conjunction with a relative movement between an information carrier and a scanning and/or recording device, preferably for a device for the reproduction of information recorded on magnetic information carriers, such as for example magnetic tapes or magnetic discs, which may also be audio and/or data signals recorded in a plurality of tracks, having a first optical system (1) for forming a scanning light spot and having a second optical system (2) for scanning the information carrier (16) with a concentric bimirror arrangement (12, 13), which includes a convex mirror (13) having a first radius of curvature and a concave mirror (12) having a second radius of curvature, the second radius of curvature preferably being equal to twice the first radius of curvature, a concentric bimirror arrangement (12, 13) being used bidirectionally in just one optical system by an integration of the functions of the known first optical system (1) for light spot formation and of the second optical system (2) for light spot scanning, and a light spot (151) in line form imaged on the Kerr coating of a magneto-optical transducer (15) by the bimirror arrangement (12, 13) being produced as a virtual image of a light source in point form by a cylindrical mirror (11) and a first planar mirror (14), placed opposite the concave mirror (12) of the bimirror arrangement (12, 13), and a reflection light spot (152) in line form, reflected by the Kerr coating, being imaged on a photo-electric transducer (20) by a second planar mirror (17), which is placed opposite the concave mirror (12) of the bimirror arrangement (12, 13), the bimirror arrangement (12, 13) and a third planar mirror (18), which is placed opposite the concave mirror (12) of the bimirror arrangement (12, 13).

2. Process according to Claim 1, characterized in that, for scanning information recorded in a plurality of tracks by the use of a cylindrical lens (11) in conjunction with the concentric bimirror arrangement (12, 13), a narrow scanning light spot in line form is produced, by which the scanning of a plurality of individual information tracks is carried out with one electro-optical transducer (20).

3. Process for producing an arrangement intended for carrying out the process according to one of Claims 1 to 2, having a concave mirror (12) and a convex mirror (13), which form a concentric bimirror arrangement (12, 13), a first, a second and a third planar mirror (14, 17, 18) and a cylindrical mirror (11) being produced as reflecting surfaces on a one-piece, optically transparent carrier.

4. Process for producing an arrangement intended for carrying out the process according to one of Claims 1 to 3, characterized in that a concave mirror (12) and a convex mirror (13), which form a concentric bimirror arrangement (12, 13), a first, a second and a third planar mirror (14, 17, 18) and a cylindrical mirror (11) are produced as reflecting surfaces on a one-piece, optically transparent carrier which has a high refractive index.

5. Process for producing an arrangement intended for carrying out the process according to one of Claims 1 to 4, characterized in that the magneto-optical transducer (15), fastened by an optically transparent adhesive on an optically transparent carrier, is produced as a compact optical assembly, the optical carrier forming by reflecting surfaces a concave mirror (12) and a convex mirror (13) as a concentric bimirror (12, 13), a first, a second and a third planar mirror (14, 17, 18) and a cylindrical mirror (11).

6. Arrangement for an optical system for the reproduction and/or recording of information in conjunction with a relative movement between an information carrier and a scanning and/or recording device, preferably for a device for the reproduction of information recorded on magnetic information carriers, such as for example magnetic tapes or magnetic discs, which may also be audio and/or data signals recorded in a plurality of tracks, having a first optical system (1) for forming a scanning light spot and having a second optical system (2) for scanning the information carrier (16) with a concentric bimirror arrangement (12, 13), which includes a convex mirror (13) having a first radius of curvature and a concave mirror (12) having a second radius of curvature which is preferably equal to twice the first radius of curvature,
- two spherical mirrors, a concave mirror (12) having the radius 2R and a convex mirror (13) having the radius R, which has a smaller aperture angle than the concave mirror (12), being provided as the concentric bimirror arrangement (12, 13),
- a light source (10) in point form being provided on a first side of the bimirror arrangement (12, 13) approximately on a level with the concave mirror (12),
- a cylindrical mirror (11), producing a virtual image in line form of the light source (10), being provided on the side of the convex mirror (13) of the bimirror arrangement (12, 13) approximately on a level with the convex mirror (13) for imaging the virtual image of the light source (10) by reflection on the concave mirror (12), thereafter on the convex mirror (13) and once again on the concave mirror (12), and also on
- a first planar mirror (14) arranged approximately on a level with the convex mirror (13),
- there being placed opposite which first planar mirror (14), reflecting the imaged virtual image and approximately on a level with the convex mirror (13), a Kerr coating of a magneto-optical transducer (15), onto which coating a scanning light spot is deflected by the first planar mirror (14),
- a second planar mirror (17), reflecting the light reflected in the magneto-optical transducer (15) onto the concave mirror (12) being arranged next to the first planar mirror (14) and the convex mirror (13),
- a third planar mirror (18) being provided next to the convex mirror (13) and the cylindrical mirror (11) and reflecting through an analyser (19) onto a photo-electric detector (20) the light reflected by the second planar mirror (17) onto the concave mirror (12), from there onto the convex mirror (13) and from there once again onto the concave mirror (12).

7. Arrangement according to Claim 6, characterized in that the concave mirror (12), the convex mirror (13), the three planar mirrors (14, 17, 18) and the cylindrical mirror (11) are reflecting surfaces of a one-piece, optically transparent carrier, to which a magneto-optical transducer (15) is bonded.

8. Arrangement according to Claim 7, characterized in that the optically transparent carrier is a transparent material having a high refractive index.

9. Arrangement according to one of Claims 7 or 8, characterized in that the magneto-optical transducer (15) and the optically transparent carrier are bonded to each other by means of an optically transparent adhesive coating.

## Revendications

1. Procédé relatif à un système optique pour la reproduction et/ou l'enregistrement d'information en rapport avec un mouvement relatif entre un support d'information et un système de balayage et/ou d'enregistrement, de préférence pour un équipement de reproduction d'informations enregistrées sur des supports d'information magnétiques, comme par exemple des bandes magnétiques ou des disques magnétiques, pouvant également être des signaux audio et/ou de données enregistrés sur plusieurs pistes, avec un premier système optique (1) pour la création d'un spot lumineux et avec un second système optique (2) pour le balayage du support d'information (16) avec un dispositif concentrique à double miroir (12, 13) contenant un miroir convexe (13) possédant un premier rayon de courbure et un miroir concave (12) possédant un deuxième rayon de courbure, où le deuxième rayon de courbure est de préférence égal à deux fois le premier rayon de courbure, où un dispositif concentrique à double miroir (12, 13) est utilisé uniquement dans un système optique de manière bidirectionnelle par l'intégration des fonctions du premier système optique (1) pour la création de spots lumineux et du deuxième système optique (2) pour le balayage des spots lumineux et où un spot lumineux en forme de trait (151), représenté avec le dispositif concentrique à double miroir (12, 13) sur la couche Kerr d'un convertisseur magnéto-optique (15), est créé en tant qu'image virtuelle d'une source lumineuse en forme de point avec un miroir cylindrique (11) et un premier miroir plat (14) placé face au miroir concave (12) du dispositif concentrique à double miroir (12, 13) et où un spot lumineux réflecteur en forme de trait (152), réfléchi par la couche Kerr, avec un deuxième miroir plat (17) placé face au miroir concave (12) du dispositif concentrique à double miroir (12, 13), avec le dispositif concentrique à double miroir (12, 13) et avec le miroir concave (12) placé face au dispositif concentrique à double miroir (12, 13), est représenté sur un convertisseur photoélectrique.

2. Procédé conforme à la revendication 1, **caractérisé en ce qu**'un spot lumineux de balayage étroit est créé pour le balayage d'informations enregistrées sur plusieurs pistes en utilisant une lentille cylindrique (11) en rapport avec le dispositif concentrique à double miroir, et permet le balayage de plusieurs pistes d'information individuelles avec un convertisseur photoélectrique (20).

3. Procédé de conception d'un dispositif prévu pour la réalisation du procédé conforme à la revendication 1 ou 2, avec un miroir concave (12) et un miroir convexe (13) constituant un dispositif concentrique à double miroir (12, 13), où un premier, un second et un troisième miroir plat (14, 17, 18) et un miroir cylindrique (11) sont conçus comme surfaces réfléchissantes sur un support diaphane d'une pièce.

4. Procédé de conception d'un dispositif prévu pour la réalisation du procédé conforme à l'une des revendications 1 à 3, **caractérisé en ce qu**'un miroir concave (12) et un miroir convexe (13) constituent un dispositif concentrique à double miroir (12, 13), un premier, un deuxième et un troisième miroir plat (14, 17, 18) et un miroir cylindrique (11) sont conçus comme surfaces réfléchissantes sur un support diaphane d'une pièce, présentant un indice de réfraction élevé.

5. Procédé de conception d'un dispositif prévu pour la réalisation du procédé conforme à l'une des revendications 1 à 4, **caractérisé en ce que** le convertisseur magnéto-optique (15), fixé au support diaphane à l'aide d'une colle transparente, est conçu en tant que bloc optique compact, où un miroir concave (12) et un miroir convexe (13) constituant un dispositif concentrique à double miroir (12, 13), un premier, un deuxième et un troisième miroir plat (14, 17, 18) et un miroir cylindrique (11), sont conçus comme surfaces réfléchissantes du support optique.

6. Procédé relatif à un système optique pour la reproduction et/ou l'enregistrement d'information en rapport avec un mouvement relatif entre un support d'information et un système de balayage et/ou d'enregistrement, de préférence pour un équipement de reproduction d'informations enregistrées sur des supports d'information magnétiques, comme par exemple des bandes magnétiques ou des disques magnétiques, pouvant également être des signaux audio et/ou de données enregistrés sur plusieurs pistes, avec un premier système optique (1) pour la création d'un spot lumineux de balayage et avec un second système optique (2) pour le balayage du support d'information (16) avec un dispositif concentrique à double miroir (12, 13) contenant un miroir convexe (13) possédant un premier rayon de courbure et un miroir concave (12) possédant un deuxième rayon de courbure, où le deuxième rayon de courbure est de préférence égal à deux fois le premier rayon de courbure, où
- deux miroirs sphériques, un miroir concave (12) avec le rayon 2R et un miroir convexe (13) avec le rayon R présentant un angle d'ouverture inférieur à celui du miroir concave (12), sont prévus en tant que dispositif concentrique à double miroir (12, 13),
- une source lumineuse en forme de point (10) est prévue sur un premier côté du dispositif concentrique à double miroir (12, 13), approximativement à hauteur du miroir concave (12),
- un miroir cylindrique (11), produisant une image virtuelle en forme de trait de la source lumineuse (10), placé sur le côté du miroir convexe (13) du dispositif concentrique à double miroir (12, 13), approximativement à hauteur du miroir concave (12), est prévu pour créer l'image virtuelle de la source lumineuse (10) par réflexion sur le miroir concave (12), puis sur le miroir convexe (13) et à nouveau sur le miroir concave (12) ainsi que sur
- un premier miroir plat (14), placé approximativement à hauteur du miroir convexe (13),
- une couche Kerr d'un convertisseur magnéto-optique (15) est placée face au premier miroir plat (14) réfléchissant l'image virtuelle représentée, approximativement à hauteur du miroir convexe (13) et un spot lumineux de balayage est dirigé sur cette couche avec le premier miroir plat (14),
- un deuxième miroir plat (17), réfléchissant sur le miroir concave (12) la lumière réfléchie dans le convertisseur magnéto-optique (15), est placé à côté du premier miroir plat (14) et du miroir convexe (13),
- un troisième miroir plat (18), prévu à côté du miroir convexe (13) et du miroir cylindrique (11), réfléchit la lumière réfléchie, du deuxième miroir plat (17) sur le miroir concave (12), puis sur le miroir convexe (13) et à nouveau sur le miroir concave (12) à travers un analyseur (19)
- sur un détecteur photoélectrique (20).

7. Dispositif conforme à la revendication 6, **caractérisé en ce que** le miroir concave (12), le miroir convexe (13), les trois miroirs plats (14, 17, 18) et le miroir cylindrique (11) sont les surfaces réfléchissantes d'un support diaphane d'une pièce, auquel un convertisseur magnéto-optique (15) est relié.

8. Dispositif conforme à la revendication 7, **caractérisé en ce que** le support diaphane est un matériau ayant un indice de réfraction élevé.

9. Dispositif conforme à la revendication 7 ou 8, **caractérisé en ce que** le convertisseur magnéto-optique (15) et le support diaphane sont reliés entre eux sur une couche de colle transparente.
